# EUROPEAN PATENT SPECIFICATION

(11) **EP 3 933 697 B1**
(45) Date of publication and mention of the grant of the patent: **15.06.2022**
(21) Application number: 21165781.2
(22) Date of filing: 30.03.2021
(51) Int. Cl.: G06K 19/077

(54) **BIOMETRIC IMAGING MODULE AND METHOD FOR MANUFACTURING A BIOMETRIC IMAGING MODULE**
BIOMETRISCHES BILDGEBUNGSMODUL UND VERFAHREN ZUR HERSTELLUNG EINES BIOMETRISCHEN BILDGEBUNGSMODULS
MODULE D'IMAGERIE BIOMÉTRIQUE ET PROCÉDÉ DE FABRICATION D'UN MODULE D'IMAGERIE BIOMÉTRIQUE

(30) Priority: 01.07.2020 SE 2050816
(43) Date of publication of application: 05.01.2022
(73) Proprietor: Fingerprint Cards Anacatum IP AB, 411 19 Göteborg (SE)
(72) Inventor: MO, Zhimin, 431 59 Mölndal (SE); SLOTTNER, Mats, 443 31 Lerum (SE)
(74) Representative: Kransell & Wennborg KB

(56) References cited:
- US-A1- 2012 049 309
- US-A1- 2019 302 504
- US-B1- 9 773 153

## Description

### Field of the Invention

The present invention relates to biometric imaging module suitable for integration in a smart card and to a method for manufacturing such a biometric imaging module.

### Background of the Invention

Various types of biometric systems are used more and more in order to provide increased security and/or enhanced user convenience. In particular, fingerprint sensing systems have been adopted in, for example, consumer electronic devices, thanks to their small form factor, high performance, and user acceptance.

Among the various available fingerprint sensing principles (such as capacitive, optical, ultrasonic, thermal etc.), capacitive sensing is most commonly used in applications where size and power consumption are important issues. Capacitive fingerprint sensors provide a measure indicative of the capacitance between each of several sensing structures and a finger placed on or moved across the surface of the fingerprint sensor.

Moreover, fingerprint sensor integration in smart cards is increasingly requested by the market. However, the requirements of the fingerprint sensor in a smart card may be different compared to when the sensor is used in a smartphone. For example, since the cost of a smartcard is significantly lower than the cost of smartphone, it is even more desirable to reduce the cost of the fingerprint sensor for a smart card.

Furthermore, it is also desirable to simplify the manufacturing of smartcards, and in particular in relation to the integration of a fingerprint sensor, in order to achieve an attractive cost of a smartcard incorporating a fingerprint sensor.

Accordingly, is desirable to provide an improved fingerprint sensor module suitable for integration in a smart card, and a method for manufacturing such a fingerprint sensor module.

US 9,773,153 B1 describes a fingerprint sensor module comprising a fingerprint sensing device on a first side of a substrate and an electrically conductive layer on a second side of the substrate for controlling a potential of a finger in contact with the electrically conductive layer.

US 2019/302504 A1 describes a display panel comprising an auxiliary layer having an opening, and a sensor overlapping the opening.

US 2012/049309 A1 describes a smartcard comprising a fingerprint sensor chip on a film substrate, wherein the film substrate comprises an opening for exposing a sensing area.

### Summary

In view of above-mentioned and other drawbacks of the prior art, it is an object of the present invention to provide a biometric imaging module which can used in a reel-to-reel production process, thereby enabling large scale adoption of such a module.

According to a first aspect of the invention, there is provided a method for manufacturing a biometric imaging module. The method comprises: providing a carrier tape; forming a sensor opening and at least one contact pad opening in the carrier tape, wherein the sensor opening is adjacent to and separate from the contact opening; and, from the top side of the carrier tape, arranging a biometric sensor on the carrier tape such that a body of the biometric sensor is arranged in the sensor opening and a conductive contact pad of the biometric sensor is aligned with and accessible through the contact pad opening from a backside of the carrier tape, and such that a sensing surface of the biometric sensor is facing in the same direction as the top side of the carrier tape.

The claimed method describes the preparation of a biometric imaging module suitable for use in a smartcard. For smartcard integration, a capacitive fingerprint sensor is advantageously used due to its low cost and mature technology. However, the described method is equally applicable for other types of biometric sensors such as optical or ultrasonic sensors. In the described method, the biometric sensor is manufactured separately, and the method is aimed at forming a biometric sensor module which is ready for integration in a smartcard.

The present invention is based on the realization that by forming openings in a carrier tape with individual openings for conductive pads of a biometric sensor, a low-profile biometric sensor module can be formed in a reel-to-reel format which can be subsequently used in a large-scale process. In particular, the configuration of the openings of the carrier film and the corresponding configuration of the contact pads allow the biometric sensor to be carried by the carrier film without requiring a surface area which is larger than the biometric sensor itself.

An additional advantage of the claimed invention is that there is no need for metal traces on the carrier tape, since all of the required contacts are formed in the biometric sensor, thereby enabling the use of a low-cost carrier tape which can be made of non-conductive materials such as a polymer.

According to one embodiment of the invention, arranging the biometric sensor on the carrier tape comprises depositing a glue layer on a top side of carrier tape prior to the step of forming openings in the carrier tape, and fixing the biometric sensor to the carrier tape by means of the glue layer. The glue layer may advantageously be laminated to the carrier tape, and the openings for the sensor and contact pad are thus formed simultaneously in both the glue layer and the carrier tape. The biometric sensor may also be fixed to the carrier tape using a hot stamping technique as will be described in the following detailed description.

According the invention, the contact pad opening of the carrier tape is separate from the opening for the sensor. The contact pad of the biometric module is thereby located at a sufficient distance from the biometric sensor body such that a separate opening in the carrier tape can be used. However. in some applications the distance between the contact pad and the body of the biometric sensor may be so small that it is difficult to form a separate opening in the carrier film. Whether the contact pad opening is formed as a separate opening or not depends, among other thing on factors such as the separation distance, the thickness of the carrier tape and the tolerances and precision of the process for forming the openings.

According to one embodiment of the invention the biometric sensor comprises a cover structure arranged to cover the sensor body, the conductive contact pad being arranged on the cover structure, and wherein a portion of the cover structure is arranged and configured to extend past the contact pad. The cover structure is thereby larger than the body of the fingerprint sensor which define the active sensing region, and by arranging the conductive contact pad on the cover structure instead of on the backside of the sensor body, the thickness of the resulting biometric imaging module can be reduced, which is of particular importance for smartcard integration. In some embodiments the size of the cover structure may correspond to the size of the active sensing area of the biometric sensor so that the full outer surface of the cover structure defines the active sensing area.

According to one embodiment of the invention, the sensor body is arranged to protrude below a bottom surface of the carrier tape. Thereby, the overall thickness of the biometric imaging module can be minimized since the carrier tape does not add to the total thickness of the module.

According to one embodiment of the invention, the glue layer is deposited through lamination of a glue film to the top side of the carrier tape.

The carrier tape may be a flexible reel-to-reel-type film. The method may further comprise depositing a glue layer on a bottom side of the carrier tape, for example in preparation for mounting the imaging module in a device such as a smartcard.

The method may further comprise punching out the biometric imaging module from the carrier tape. The punched out biometric imaging module may further be arranged in an opening of a smart card followed by forming an electrical connection between the biometric sensor and smartcard circuitry by means of the conductive contact pad.

According to one embodiment of the invention, the method comprises soldering contacts of the smart card to the conductive contact pad, wherein the contact pad opening of the carrier tape constrains the soldering area. When the biometric imaging module is placed in the smart card, contacts between the conductive contact pad and the smart card are formed by soldering. When the thickness of the conductive contact pad is lower than the thickness of the carrier tape, a recess will be formed in the carrier tape and during soldering this recess will constrain the solder from floating out and away from the contact pad. The soldering process can thereby be improved by means of a recess formed by the carrier tape.

According to a second aspect of the invention there is provided a biometric imaging module comprising: a carrier tape comprising a sensor opening and a contact pad opening, wherein the sensor opening is adjacent to and separate from the contact pad opening; a biometric sensor attached to a first side of the carrier tape such the body of the biometric sensor is located in the sensor opening of the carrier tape, wherein the biometric sensor comprises an active sensing area facing in the same direction as the first side of the carrier tape, the biometric sensor further comprising a conductive contact pad aligned with the contact pad opening and accessible from a second side

Additional effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a flow chart outlining general steps of the method according to an embodiment of the invention;
Figs. 2A-D schematically illustrate steps of a method according to an embodiment of the invention;
Figs. 3A-B are schematic perspective views of a biometric imaging module according to an embodiment of the invention;
Fig. 4 schematically illustrate a biometric imaging module according to an embodiment of the invention; and
Fig. 5 schematically illustrates a biometric imaging module integrated in a smartcard according to an embodiment of the invention.

### Detailed Description of Example Embodiments

In the present detailed description, various embodiments of the method for manufacturing an image module and the biometric image module according to the present invention are mainly described with reference to a capacitive fingerprint sensing device for integration in a smartcard. However, the described method is equally applicable for other types of biometric sensors and for other applications such as loT devices and the like.

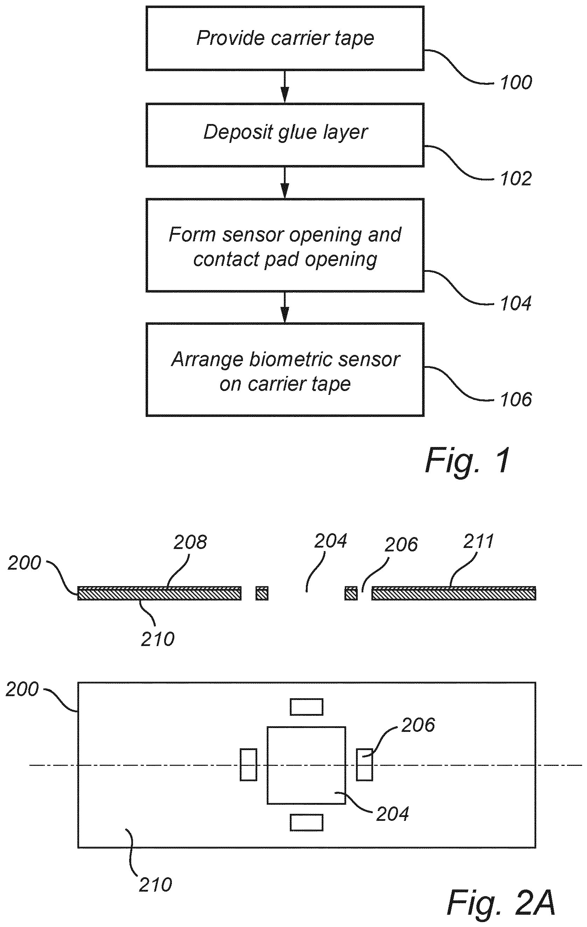

Fig. 1 is a flow chart outlining general steps of the method, and the method will be described with further reference to Figs. 2A-D illustrating various steps of the method.

The first step comprises providing 100 a carrier tape 200. The carrier tape 200 is preferable provided in the form of a flexible reel-to-reel type film acting as the carrier tape.

The method further comprises depositing 102 a glue layer 211 on a top side 208 of the carrier tape 200, wherein the glue layer 211 is preferably deposited through lamination of a glue film 211 to the top side 208 of the carrier film 200. The next step comprises forming 104 a sensor opening 204 and at least one contact pad opening 206 in the carrier tape 200, wherein the sensor opening 204 is adjacent to the contact pad openings 206 as illustrated in Fig. 2A showing first a side view and secondly a view from the bottom side 210 of the carrier tape 200. The required openings are thereby formed in the glue layer 211 as well as in the carrier tape 200, preferably by punching out the opening using an appropriate tool. In the example illustrated in Fig. 2A the carrier film comprises four separate contact pad openings 206 with one opening 206 on each side of the rectangular sensor opening 204. The smaller conductive pad openings 206 may also be located closer to the sensor opening 204

Next, a biometric sensor 212 is arranged 106 on the carrier tape 200 from the top side 208 of the carrier tape and fixed to the carrier tape 200 by means of the glue layer 208. Instead of using a glue layer, it would be equally possible to fix the biometric sensor to the carrier tape by means of so-called hot stamping. In a hot stamping technique, the carrier tape 200 itself is made from a thermoplastic material or a B-stage epoxy. When the biometric sensor 212 is placed onto the carrier tape 200 using a holder, both a pressing force and heat are applied via the holder so that the biometric sensor 212 becomes firmly fixed in the correct position in relation to the carrier tape 200.

The biometric sensor 212 is placed such that a body 214 of the biometric sensor 212 is located in the sensor opening 204 and the conductive contact pads 216 of the biometric sensor 212 are aligned with and accessible from the bottom side 210 of the carrier tape through the corresponding contact pad openings 206 of the carrier tape 200. A sensing surface 219 of the biometric sensor 212 is facing in the same direction as the top side 208 of the carrier tape 200. The top and bottom sides 208, 210 of the carrier tape 200 are defined in relation to the biometric sensor 212 such that the sensing surface 219 of the biometric sensor 212 is facing in the same direction as the top side 208 of the carrier tape 200.

The conductive contact pads 216 of the biometric sensor 212 are configured to form an electrical connection between the biometric sensor 212 and external circuitry, such as circuitry in a smart card, so that the biometric sensor 212 can be used e.g. for authentication of a user of the smartcard. Moreover, the biometric sensor 212 comprises an electrically conductive bezel 221 which is accessible from the top side of the biometric sensor 212 and which is located adjacent to the sensing surface 219. The bezel is used to control the electric potential of a finger in contact with the biometric sensor 212 which is advantageous in capacitive sensing methods. However, the described bezel is not strictly required for the overall functionality of the sensor and is therefore optional.

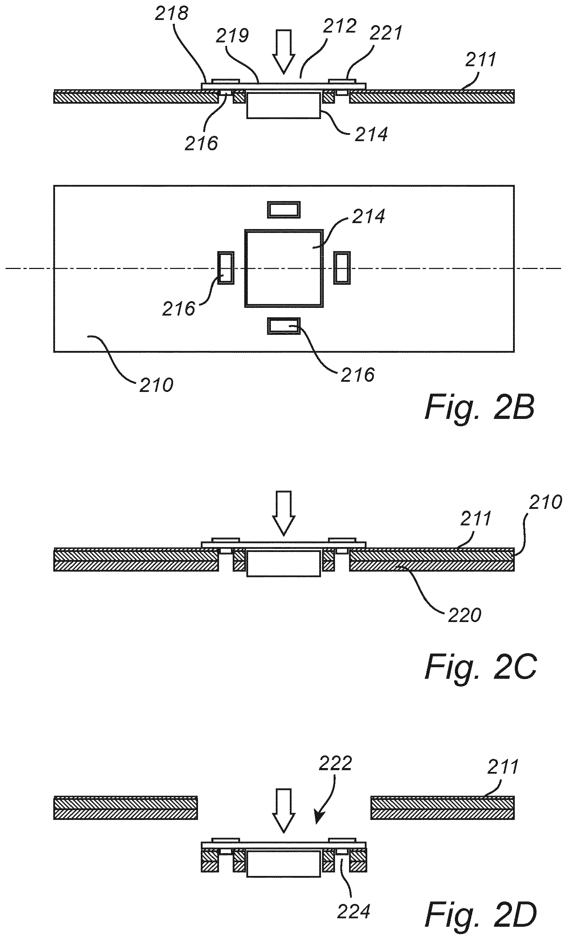

The biometric sensor further comprises a cover structure 218 arranged to cover the sensor body 214 as can be seen in Figs. 2B-D. The cover structure 218 can be made from materials used for PCBs (printed circuit boards) using a glass fiber core or from PI (polyimide) materials without glass fiber. The sensing surface 219 is thereby formed by the top surface of the cover structure 218 and the conductive contact pad 216 is arranged on the bottom surface of the cover structure, and wherein a portion of the cover structure is arranged and configured to be larger than the sensor body 214 and to extend past the contact pad 216.

Fig. 2C illustrates that a glue layer 220 (hot-melt) is deposited on the backside 210 of the carrier film in preparation for arranging the biometric sensor module in a smartcard. The hot-melt layer 220 may be deposited on the backside 210 of the carrier tape 200 by lamination, and the openings of the hot-melt layer 220 are formed before lamination. The openings in the hot-melt layer 220 are preferably punched out of the layer in a similar way as the openings of the carrier tape 200 are formed.

In Fig. 2d, the biometric sensor 212 is punched out from the carrier film 200 to form a T-shaped biometric sensor module 222 suitable for smartcard integration.

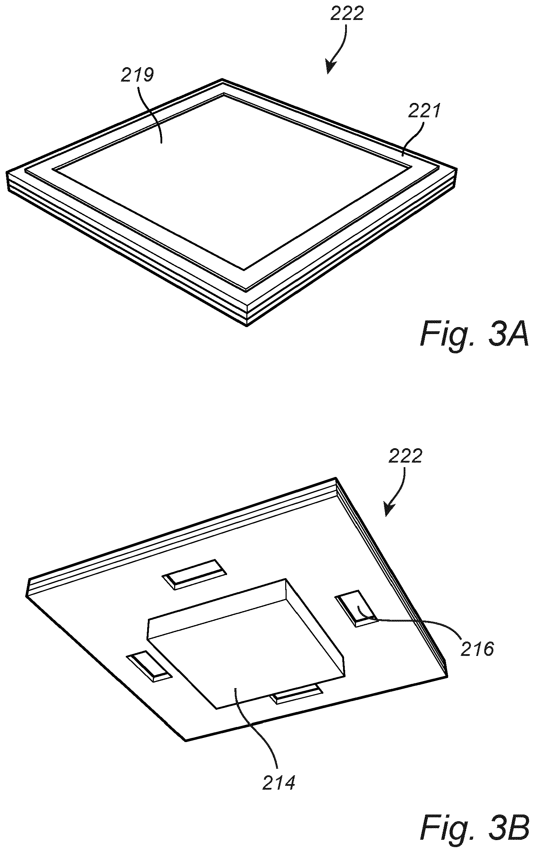

Fig. 3 is a perspective view of the biometric sensor module 222 as seen from above illustrating the sensing surface 219 and the bezel 221.

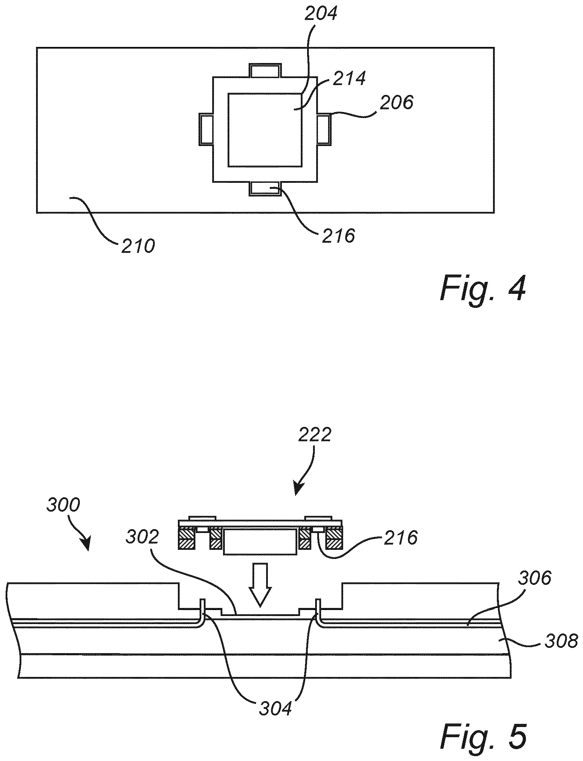

Fig. 4 is a schematic illustration of an embodiment where there is no carrier tape between the conductive pad openings 206 and the sensor opening 204. In other words, the contact pad opening 206 can be seen as a cutout of the sensor opening 204. As can be seen, there is still a separation between the contact pads 206 and the sensor body 214.

Fig. 5 illustrates the assembly of a T-shaped biometric sensor module 222 in a smart card 300. The smart card 300 comprises a recess 302 having a T-shape corresponding to the T-shape of the sensor module 222. Here it can be seen that conducive contact pads 216 of the biometric sensor module 222 are located such that they can form an electrical connection with corresponding connections 304 of the smart card 300. The biometric sensing module 200 is advantageously attached to the smart card substrate using an adhesive with solder material at the locations of the connections 304. The electrical path is formed from the biometric sensor 212 through the conductive contact pads 216 on the cover structure 218 and via solder joints to wires 306 in the card body 308. Mechanical adhesion can be enabled by the so called "hot-melt" (a thermoplastic adhesive, 220) arranged between the extending portion of the cover structure 218 of the biometric imaging module 222 and the card body 308.

The recess 224 formed by the remaining carrier film 200 in the biometric imaging module can thereby assist the soldering process by preventing the solder from flowing away from the conductive contact pads 216. Thereby, the risk of electrical short circuits and of solder contamination is reduced, improving the overall quality of the soldering step. Furthermore, the fingerprint sensor module 200 can be placed in the smart card 300 using a hot-stamping process.

Even though the invention has been described with reference to specific exemplifying embodiments thereof, many different alterations, modifications and the like will become apparent for those skilled in the art. Also, it should be noted that parts of the method and imaging module may be omitted, interchanged or arranged in various ways, the imaging module yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Method for manufacturing a biometric imaging module (222), the method comprising:
providing (100) a carrier tape (200);
forming (104) a sensor opening (204) and at least one contact pad opening (206) in the carrier tape, wherein the sensor opening is adjacent to and separate from the contact pad opening; and
from a top side of the carrier tape, arranging (106) a biometric sensor (212) on the carrier tape such that a body (214) of the biometric sensor is arranged in the sensor opening and a conductive contact pad (216) of the biometric sensor is aligned with and accessible through the contact pad opening from a backside of the carrier tape, and such that a sensing surface of the biometric sensor is facing in the same direction as the top side of the carrier tape.

2. The method according to claim 1, further comprising depositing (102) a glue layer (211) on a top side (208) of carrier tape prior to forming the sensor opening and contact pad opening and fixing the biometric sensor to the carrier tape by means of the glue layer.

3. The method according to claim 2, wherein the glue layer is deposited through lamination of a glue film to the top side of the carrier film.

4. The method according to claim 1, wherein arranging (106) the biometric sensor (212) on the carrier tape comprises fixing the biometric sensor to the carrier tape by means of hot stamping.

5. The method according to any one of the preceding claims, wherein the biometric sensor comprises a cover structure (218) arranged to cover the sensor body, the conductive contact pad being arranged on the cover structure, and wherein a portion of the cover structure is arranged and configured to extend past the contact pad.

6. The method according to any one of the preceding claims, wherein the sensor body is arranged to protrude below a bottom surface (210) of the carrier tape.

7. The method according to any one of the preceding claims, further comprising arranging the biometric imaging module in an opening of a smart card and forming an electrical connection between the biometric sensor and smartcard circuitry by means of the conductive contact pad.

8. The method according to claim 7, further comprising soldering contacts of the smart card to the conductive contact pad, wherein the contact pad opening of the carrier tape constrains the soldering area.

9. A biometric imaging module (222) comprising
a carrier tape (200) comprising a sensor opening (204) and a contact pad opening (206), **characterized in that** the sensor opening is adjacent to and separate from the contact pad opening; the module (222) further comprises
a biometric sensor (212) attached to a first side (208) of the carrier tape such that a body (214) of the biometric sensor is located in the sensor opening of the carrier tape, wherein the biometric sensor comprises an active sensing area (219) facing in the same direction as the first side of the carrier tape, the biometric sensor further comprising a conductive contact pad (216) aligned with the contact pad opening and accessible from a second side (210) of the carrier tape, the second side being opposite the first side.

10. The biometric imaging module according to claim 9, wherein the body of the biometric sensor is arranged to protrude through the carrier tape on the second side of the carrier tape.

11. The biometric imaging module according to any one of claim 9 to 10, wherein the biometric sensor comprises a cover structures arranged to cover the sensor body, and wherein a sensing surface is formed by an exterior surface of the cover structure.

12. The biometric imaging module according to any one of claims 9 to 11, wherein the cover structure is larger than the sensor module body, and wherein the conductive contact pad is arranged on the cover structure.

13. A smartcard (300) comprising a biometric imaging module according to any one of claims 9 to 12, wherein the conductive contact pad of the biometric imaging module is arranged in contact with a conductive trace of the smartcard.

## Patentansprüche

1. Verfahren zum Herstellen eines biometrischen Bildgabemoduls (222), wobei das Verfahren umfasst:
Bereitstellen (100) eines Trägerbandes (200);
Bilden (104) einer Sensoröffnung (204) und mindestens einer Kontaktpadöffnung (206) in dem Trägerband, wobei sich die Sensoröffnung neben der Kontaktpadöffnung befindet und von der Kontaktpadöffnung getrennt ist; und
von einer Oberseite des Trägerbandes her, Anordnen (106) eines biometrischen Sensors (212) auf dem Trägerband dergestalt, dass ein Körper (214) des biometrischen Sensors in der Sensoröffnung angeordnet ist und eine leitfähige Kontaktfläche (216) des biometrischen Sensors auf die Kontaktflächenöffnung ausgerichtet und durch die Kontaktflächenöffnung hindurch von einer Rückseite des Trägerbandes her zugänglich ist, und dergestalt, dass eine Abfühlfläche des biometrischen Sensors in dieselbe Richtung wie die Oberseite des Trägerbandes weist.

2. Verfahren nach Anspruch 1, das des Weiteren das Aufbringen (102) einer Klebstoffschicht (211) auf eine Oberseite (208) des Trägerbandes vor dem Bilden der Sensoröffnung und der Kontaktflächenöffnung sowie das Befestigen des biometrischen Sensors an dem Trägerband mittels der Klebstoffschicht umfasst.

3. Verfahren nach Anspruch 2, wobei die Klebstoffschicht durch Laminierung eines Klebstofffilms auf die Oberseite des Trägerfilms aufgebracht wird.

4. Verfahren nach Anspruch 1, wobei das Anordnen (106) des biometrischen Sensors (212) auf dem Trägerband das Befestigen des biometrischen Sensors auf dem Trägerband mittels Heißprägen umfasst.

5. Verfahren nach einem der vorangehenden Ansprüche, wobei der biometrische Sensor eine Abdeckstruktur (218) umfasst, die dafür ausgelegt ist, den Sensorkörper zu bedecken, wobei das leitfähige Kontaktpad auf der Abdeckstruktur angeordnet ist, und wobei ein Abschnitt der Abdeckstruktur so ausgelegt und konfiguriert ist, dass er sich über das Kontaktpad hinaus erstreckt.

6. Verfahren nach einem der vorangehenden Ansprüche, wobei der Sensorkörper so angeordnet ist, dass er unter eine Bodenfläche (210) des Trägerbandes vorsteht.

7. Verfahren nach einem der vorangehenden Ansprüche, das des Weiteren das Anordnen des biometrischen Bildgabemoduls in einer Öffnung einer Chipkarte und das Bilden einer elektrischen Verbindung zwischen dem biometrischen Sensor und der Chipkartenschaltung mittels des leitfähigen Kontaktpads umfasst.

8. Verfahren nach Anspruch 7, das des Weiteren das Löten von Kontakten der Chipkarte an das leitfähige Kontaktpad umfasst, wobei die Kontaktpadöffnung des Trägerbandes den Lötbereich umgrenzt.

9. Biometrisches Bildgabemodul (222), das ein Trägerband (200) umfasst, das eine Sensoröffnung (204) und eine Kontaktpadöffnung (206) umfasst, **dadurch gekennzeichnet, dass** sich die Sensoröffnung neben der Kontaktpadöffnung befindet und von der Kontaktpadöffnung getrennt ist;
wobei das Modul (222) des Weiteren einen biometrischen Sensor (212) umfasst, der an einer ersten Seite (208) des Trägerbandes so angebracht ist, dass sich ein Körper (214) des biometrischen Sensors in der Sensoröffnung des Trägerbandes befindet, wobei der biometrische Sensor einen aktiven Abfühlbereich (219) umfasst, der in dieselbe Richtung wie die erste Seite des Trägerbandes weist, wobei der biometrische Sensor des Weiteren ein leitfähiges Kontaktpad (216) umfasst, das auf die Kontaktpadöffnung ausgerichtet und von einer zweiten Seite (210) des Trägerbandes her zugänglich ist, wobei die zweite Seite der ersten Seite gegenüberliegt.

10. Biometrisches Bildgabemodul nach Anspruch 9, wobei der Körper des biometrischen Sensors so angeordnet ist, dass er durch das Trägerband hindurch auf der zweiten Seite des Trägerbandes vorsteht.

11. Biometrisches Bildgabemodul nach einem der Ansprüche 9 und 10, wobei der biometrische Sensor eine Abdeckstruktur umfasst, die dafür ausgelegt ist, den Sensorkörper zu bedecken, und wobei eine Abfühlfläche durch eine Außenfläche der Abdeckstruktur gebildet wird.

12. Biometrisches Bildgabemodul nach einem der Ansprüche 9 bis 11, wobei die Abdeckstruktur größer als der Sensormodulkörper ist, und wobei das leitfähige Kontaktpad auf der Abdeckstruktur angeordnet ist.

13. Chipkarte (300), die ein biometrisches Bildgabemodul nach einem der Ansprüche 9 bis 12 umfasst, wobei das leitfähige Kontaktpad des biometrischen Bildgabemoduls in Kontakt mit einer Leiterbahn der Chipkarte angeordnet ist.

## Revendications

1. Procédé de fabrication d'un module d'imagerie biométrique (222), le procédé comprenant :
la fourniture (100) d'une bande porteuse (200) ;
la formation (104) d'une ouverture de capteur (204) et d'au moins une ouverture de plot de contact (206) dans la bande porteuse, dans lequel l'ouverture de capteur est adjacente à et distincte de l'ouverture de plot de contact ; et
depuis un côté supérieur de la bande porteuse, l'agencement (106) d'un capteur biométrique (212) sur la bande porteuse de sorte qu'un corps (214) du capteur biométrique soit agencé dans l'ouverture de capteur et un plot de contact conducteur (216) du capteur biométrique soit aligné avec l'ouverture de plot de contact et accessible à travers celle-ci depuis un côté arrière de la bande porteuse, et de sorte qu'une surface de détection du capteur biométrique soit orientée dans la même direction que le côté supérieur de la bande porteuse.

2. Procédé selon la revendication 1, comprenant en outre le dépôt (102) d'une couche de colle (211) sur un côté supérieur (208) de la bande porteuse avant la formation de l'ouverture de capteur et de l'ouverture de plot de contact et la fixation du capteur biométrique sur la bande porteuse au moyen de la couche de colle.

3. Procédé selon la revendication 2, dans lequel la couche de colle est déposée par stratification d'une pellicule de colle sur le côté supérieur de la pellicule porteuse.

4. Procédé selon la revendication 1, dans lequel l'agencement (106) du capteur biométrique (212) sur la bande porteuse comprend la fixation du capteur biométrique sur la bande porteuse par estampage à chaud.

5. Procédé selon l'une quelconque des revendications précédentes, dans lequel le capteur biométrique comprend une structure de recouvrement (218) agencée pour recouvrir le corps de capteur, le plot de contact conducteur étant agencé sur la structure de recouvrement, et dans lequel une partie de la structure de recouvrement est agencée et configurée pour s'étendre au-delà du plot de contact.

6. Procédé selon l'une quelconque des revendications précédentes, dans lequel le corps de contact est agencé pour faire saillie au-dessous d'une surface inférieure (210) de la bande porteuse.

7. Procédé selon l'une quelconque des revendications précédentes, comprenant en outre l'agencement du module d'imagerie biométrique dans une ouverture d'une carte à puce et la formation d'une liaison électrique entre le capteur biométrique et la circuiterie de carte à puce au moyen du plot de contact conducteur.

8. Procédé selon la revendication 7, comprenant en outre le soudage de contacts de la carte à puce sur le plot de contact conducteur, dans lequel l'ouverture de plot de contact de la bande porteuse limite la zone de soudure.

9. Module d'imagerie biométrique (222) comprenant :
une bande porteuse (200) comprenant une ouverture de capteur (204) et une ouverture de plot de contact (206), **caractérisé en ce que** l'ouverture de capteur est adjacente à et distincte de l'ouverture de plot de contact ; le module (222) comprend en outre :
un capteur biométrique (212) fixé à un premier côté (208) de la bande porteuse de sorte qu'un corps (214) du capteur biométrique soit situé dans l'ouverture de capteur de la bande porteuse, dans lequel le capteur biométrique comprend une zone de détection active (219) orientée dans la même direction que le premier côté de la bande porteuse, le capteur biométrique comprenant en outre un plot de contact conducteur (216) aligné avec l'ouverture de plot de contact et accessible depuis un deuxième côté (210) de la bande porteuse, le deuxième côté étant à l'opposé du premier côté.

10. Module d'imagerie biométrique selon la revendication 9, dans lequel le corps du capteur biométrique est agencé pour faire saillie à travers la bande porteuse sur le deuxième côté de la bande porteuse.

11. Module d'imagerie biométrique selon la revendication 9 ou 10, dans lequel le capteur biométrique comprend une structure de recouvrement agencée pour recouvrir le corps de capteur, et dans lequel une surface de détection est formée par une surface extérieure de la structure de recouvrement.

12. Module d'imagerie biométrique selon l'une quelconque des revendications 9 à 11, dans lequel la structure de recouvrement est plus grande que le corps de module de capteur, et dans lequel le plot de contact conducteur est agencé sur la structure de recouvrement.

13. Carte à puce (300) comprenant un module d'imagerie biométrique selon l'une quelconque des revendications 9 à 12, dans laquelle le plot de contact conducteur du module d'imagerie biométrique est agencé en contact avec une piste conductrice de la carte à puce.
